# FASCICULE DE BREVET EUROPEEN

(11) **EP 1 592 945 B1**
(45) Date de publication et mention de la délivrance du brevet: **20.01.2010**
(21) Numéro de dépôt: 04709646.6
(22) Date de dépôt: 10.02.2004
(51) Int. Cl.: G01B 11/28, C14B 1/28, G01N 21/898

(54) **MACHINE D'APPRECIATION AUTOMATIQUE DE L'ETAT DE SURFACE D'ARTICLES NON RIGIDES TELS QUE DES ARTICLES TEXTILES OU DE TANNERIE, ET PROCEDE DE DETECTION ET RECONNAISSANCE DES DEFAUTS DE SURFACE**
MASCHINE ZUR AUTOMATISCHEN BEWERTUNG DES OBERFLÄCHENZUSTANDS NICHT STARRER ARTIKEL WIE ETWA TEXTIL- ODER GERBARTIKEL UND VERFAHREN ZUM DETEKTIEREN UND ERKENNEN VON OBERFLÄCHENDEFEKTEN
MACHINE FOR THE AUTOMATIC ASSESSMENT OF THE SURFACE CONDITION OF NON-RIGID ARTICLES, SUCH AS TEXTILE OR TANNING ARTICLES, AND METHOD OF DETECTING AND RECOGNISING SURFACE DEFECTS

(30) Priorité: 10.02.2003 FR 0301693
(43) Date de publication de la demande: 09.11.2005
(73) Titulaire: Turner S.A.S., 07100 Annonay (FR)
(72) Inventeur: FANGET, Christian, Charles, F-07100 Vernosc Les Annonay (FR); GASTON, Gérard, Michel, F-33610 Cestas (FR); CHAMBON, Didier, Marie, Bruno, Henri, F-42220 Bourg Argental (FR)
(74) Mandataire: Martin, Didier Roland Valéry
(86) Numéro de dépôt international: PCT/FR2004/000301
(87) Numéro de publication internationale: WO 2004/072577

(56) Documents cités:
- WO-A-02/42753
- WO-A-95/16909
- DE-A- 3 831 087
- GB-A- 2 098 318
- US-A- 5 610 710

## Description

### DOMAINE TECHNIQUE

La présente invention concerne le domaine technique général des dispositifs et procédés visant à apprécier de manière automatique selon des critères qualitatifs, et notamment par appréciation visuelle ou optique de l'état de surface, des articles non rigides et sensiblement plats, du genre articles textiles ou de tannerie, et plus particulièrement, mais non exclusivement, les peaux et cuirs résultant de traitement de tannerie.

La présente invention concerne une machine d'appréciation automatique selon des critères qualitatifs, de l'état de surface d'articles non rigides et sensiblement plats, du genre articles textiles ou de tannerie, avec un bâti principal comprenant un système de défilement de l'article comportant une zone de dépose de l'article, en aval de laquelle, en considération du sens de défilement dudit système, se trouve une zone de lecture optique de l'état de surface d'au moins une portion de l'article, ladite zone étant associée à des moyens d'éclairage et à une caméra d'enregistrement, ladite caméra étant reliée fonctionnellement à des moyens informatiques d'analyse et de traitement du signal et des informations enregistrées par la caméra.

La présente invention concerne également un procédé de détection et reconnaissance des défauts présents à la surface de peaux de tanneries,
dans lequel:
- on assure l'éclairage de la surface de la peau et on enregistre l'image de la peau par une caméra,
- puis on traite et analyse les informations et signaux formant l'image transmise par la caméra à l'aide d'un système informatique de traitement et d'analyse, pour détecter et reconnaître les défauts de la peau.

### TECHNIQUE ANTERIEURE

Dans le domaine spécifique des cuirs et peaux, il est déjà connu d'avoir recours à des machines ou dispositifs visant à simplifier et automatiser dans une certaine mesure la détection des défauts de surface des cuirs et peaux postérieurement au traitement chimique et mécanique subi après l'abattage de l'animal mais antérieurement au traitement final noble conduisant à la fabrication d'articles de luxe.

L'appréciation de l'état de la surface du cuir ou de la peau de l'animal à ce stade revêt une importance capitale et aboutit à une classification de chaque article établie à partir de critères qualitatifs provenant essentiellement d'une appréciation visuelle de l'état de surface de la peau.

Dans de nombreux cas, cette appréciation est effectuée de manière purement visuelle par un opérateur sur la base de critères pour certains objectifs, pour d'autres subjectifs, qui sont la plupart du temps propres à chaque entreprise mais qui nécessitent une longue expérience de la part de l'utilisateur.

Ces techniques traditionnelles s'avèrent longues et donc d'un rendement industriel faible, sont sources d'erreurs humaines, tout en nécessitant un personnel extrêmement qualifié et dont la formation est longue.

C'est la raison pour laquelle il a déjà été envisagé de mécaniser ou automatiser ces opérations d'appréciation et de classement qualitatif des cuirs et peaux à l'aide de machines et procédés adaptés.

Les documents WO-A- 95/16909 et DE-A-3831087 décrivent des machines d'appréciation et/ou de mesure d'un objet non-rigide.

Il a ainsi déjà été proposé de réaliser une machine d'inspection visuelle de cuirs et peaux ayant pour but de remplacer en partie la détermination manuelle de la nature et de la distribution des défauts sur une peau, qu'il s'agisse par exemple de piqûres d'insectes laissant une trace dans la peau de l'animal, ou encore de plis ou rides ou encore d'autres défauts liés à la vie, à l'alimentation et aux conditions générales d'élevage de l'animal.

La machine connue comporte un bâti sur lequel est monté un convoyeur destiné à recevoir les peaux préalablement déposées à plat par un opérateur. La machine comporte également un système de tensionnement de la peau disposé sous une station d'éclairage couplée avec une caméra destinée à enregistrer une image de la zone de la peau lorsqu'elle passe dans le système de tensionnement. Ce dernier est formé par un dispositif comportant un ensemble de rouleaux associé au système de tensionnement pour permettre une vitesse relative différentielle et supérieure de la peau au niveau du système de tensionnement, de manière à étirer sensiblement la peau dans la zone d'éclairage et de lecture.

Le procédé associé à la machine met également en oeuvre un algorithme permettant de déterminer, à l'aide des informations fournies par la caméra, la nature et la distribution des défauts.

Un tel système représente bien évidemment une amélioration notable en regard des techniques traditionnelles, mais souffre de divers inconvénients et notamment de l'inconvénient lié à la relative complexité de la machine susceptible par ailleurs d'endommager les peaux, notamment par la mise en tension subie par les peaux. De plus, il s'avère que le système d'éclairage prévu n'est pas à même de s'adapter correctement à des peaux de différentes couleurs qui peuvent générer des écarts d'appréciation notables si les corrections idoines, notamment au niveau de la caméra, ne sont pas effectuées.

Enfin, il s'avère que le système connu ne prend pas en compte tous les paramètres nécessaires pour apprécier correctement et globalement la qualité d'un article, notamment les caractères physiques des articles.

### EXPOSE DE L'INVENTION

L'objet de la présente invention vise en conséquence à porter remède aux différents inconvénients énumérés précédemment, et à proposer une nouvelle machine permettant d'apprécier automatiquement l'état de surface d'articles non rigides et sensiblement plats, en permettant d'obtenir une information particulièrement fiable et précise au sujet de l'article à apprécier quelle que soit sa couleur.

Un autre objet de l'invention vise à proposer une nouvelle machine dont la fiabilité et la facilité de lecture sont améliorées.

Un autre objet de l'invention vise à proposer une nouvelle machine qui est particulièrement facile à utiliser et à adapter ou régler, en fonction des articles à apprécier.

Un autre objet de l'invention vise à proposer une nouvelle machine permettant d'améliorer le rendement général de l'opération d'appréciation et de classement des articles non rigides, et notamment des cuirs et peaux.

Un autre objet de l'invention vise à proposer une nouvelle machine qui soit apte à fournir une information complète au sujet de la qualité de l'article à apprécier fondé sur plusieurs critères d'appréciation.

Un autre objet de l'invention vise à fournir une nouvelle machine qui soit capable de fournir une information fiable et précise au sujet de paramètres physiques de l'article à apprécier.

Un autre objet de l'invention vise à fournir une nouvelle machine qui soit capable de s'adapter facilement à différents types et tailles d'articles.

L'invention vise également à mettre au point un procédé de détection et de reconnaissance des défauts présents à la surface de peaux de tannerie, qui soit à même de fournir une information particulièrement fiable et précise au sujet de la nature et de la distribution des défauts de la peau quelle que soit sa couleur.

Un autre objet de l'invention vise à proposer un nouveau procédé qui permette une classification automatique des peaux avec un haut degré de fiabilité.

Un autre objet de l'invention vise à proposer un nouveau procédé de classification adaptable aux propres critères de l'utilisateur.

Les objets assignés à l'invention sont atteints à l'aide d'une machine d'appréciation automatique , d'un procédé de détection et reconnaissance des défauts et d'un système de défilement et d'éclairage d'un article selon les revendications.

### DESCRIPTIF SOMMAIRE DES DESSINS

D'autres objets et avantages de l'invention apparaîtront plus en détails à la lecture de la description qui suit, en référence aux dessins annexés donnés à titre d'exemples illustratifs et non limitatifs dans lesquels :
- La figure 1 illustre, selon une vue latérale, un aperçu d'ensemble d'une machine conforme à l'invention.
- La figure 2 illustre, selon une vue latérale partielle, un détail de réalisation des zones de lecture, d'éclairage et d'aspiration d'une machine conforme à l'invention.
- La figure 3 illustre, selon une vue latérale et en coupe partielle, un moyen de mesure de l'épaisseur conforme à l'invention dont la coupe est effectuée selon la ligne III-III de la figure 4, et susceptible d'être monté dans une machine conforme à l'invention.
- La figure 4 illustre, selon une vue en coupe effectuée selon la ligne IV-IV de la figure 3, un détail de réalisation du moyen de mesure de l'épaisseur conforme à l'invention.
- La figure 5 illustre, selon une vue latérale, un aperçu d'ensemble d'un mode préférentiel de réalisation de la machine conforme à l'invention.
- La figure 6 illustre, selon une vue latérale partielle, un détail de réalisation des zones de lecture, d'éclairage et de mesure de l'épaisseur d'un mode préférentiel de réalisation d'une machine conforme à l'invention.
- La figure 7 illustre, selon une vue en coupe selon la ligne V-V illustrée sur la figure 6, un bétail de réalisation préférentielle du moyen de mesure de l'épaisseur conforme à l'invention.

### MEILLEURE MANIERE DE REALISER L'INVENTION

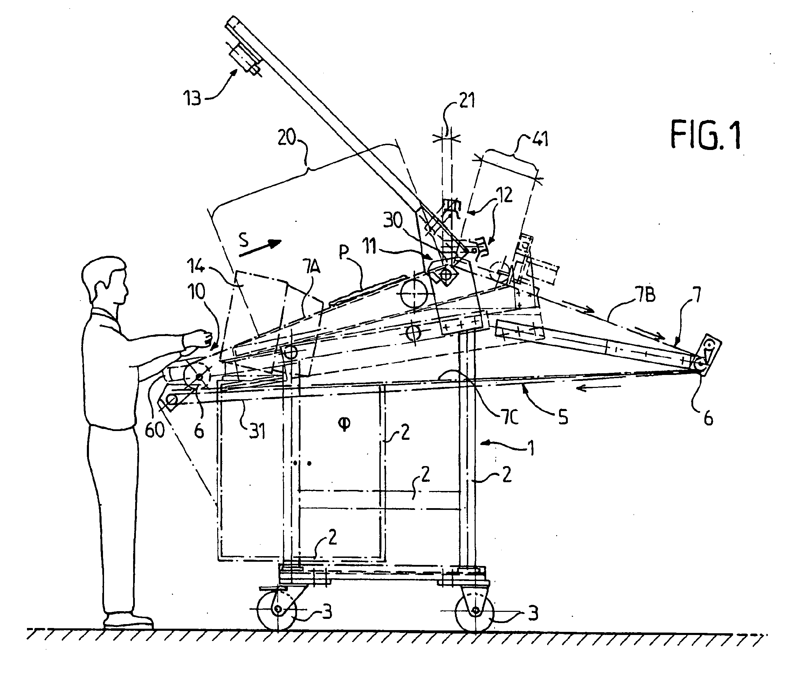

La machine d'appréciation automatique selon des critères qualitatifs, notamment de l'état de surface d'articles non rigides et sensiblement plats, du genre articles textiles ou de tannerie, telle qu'illustrée aux figures 1 à 7, comporte un bâti principal 1, formé par exemple d'un réseau d'éléments tubulaires 2 assemblés entre eux formant le châssis de la machine, supporté avantageusement par une série de roues 3 permettant une certaine mobilité.

De manière particulièrement avantageuse, la machine selon l'invention est destinée à assurer *in fine* le classement automatique d'articles non rigides sensiblement plats issus d'opérations industrielles de tannerie, tels que des cuirs et peaux, ce classement s'effectuant selon des critères qualitatifs usuels dans ce domaine prenant en compte de manière non limitative la nature et la répartition sur la surface de la peau, des griffures, des plis et rides, des piqûres d'insectes, etc....

Les critères qualitatifs utilisés correspondent donc à la nature des défauts, à leur répartition, à leur densité en général et ainsi qu'à leur localisation dans des zones plus ou moins privilégiées de la peau. La prise en compte de l'ensemble de ces critères aboutit finalement à la classification de la peau dans des catégories unitaires de qualité croissante par exemple, et au nombre de cinq par exemple.

Bien évidemment, la classification obtenue n'est pas universelle mais dépend de la grille d'exigence pré-établie pour ce qui concerne l'état de surface à prendre en compte. Selon l'invention, il est même envisageable d'inclure comme critère qualitatif supplémentaire, l'épaisseur moyenne de la peau.

Tel qu'illustré à la figure 1, le bâti principal 1 comprend et supporte à sa partie supérieure un système de défilement 5 de la peau P, ce système de défilement 5 étant avantageusement formé par un convoyeur sans fin, entraîné par un moteur (non représenté aux figures) et supporté par une pluralité de rouleaux 6 sur lesquels circule un tapis 7.

Le système de défilement 5 comporte vers une des ses extrémités, une zone de dépose 10 de l'article P en regard de laquelle se trouve l'opérateur qui assure manuellement l'alimentation de la machine avec les peaux P.

En aval de la zone de dépose 10, en considération du sens S de défilement dudit système de défilement se trouve une zone de lecture optique 11 de l'état de surface d'au moins une portion de surface de la peau ou article P.

On conçoit ainsi qu'après avoir été déposée au niveau de la zone de dépose 10, la peau P est transférée à la zone de lecture optique 11, ladite zone 11 1 étant associée à des moyens d'éclairage 12 et à une caméra d'enregistrement 13, de manière à pouvoir simultanément éclairer au niveau de la zone de lecture 11 la peau P sous une incidence lumineuse optimale, pour permettre un enregistrement également optimal de l'image de la portion de surface de la peau par la caméra 13.

A cette fin, la caméra 13 est reliée fonctionnellement à des moyens informatiques d'analyse et de traitement du signal et des informations enregistrées par la caméra 13 (non représentée aux figures) incluant notamment un ordinateur, une série de logiciels et algorithmes appropriés et un écran de visualisation 14 disposé près de l'opérateur.

Selon l'invention, les moyens d'éclairage 12 comportent d'une part un moyen d'éclairage supérieur 12A, 12B apte à éclairer les surfaces supérieures de l'article P, et d'autre part un moyen d'éclairage inférieur 12C apte à éclairer la face inférieure de l'article P, i.e. celle reposant sur le tapis 7.

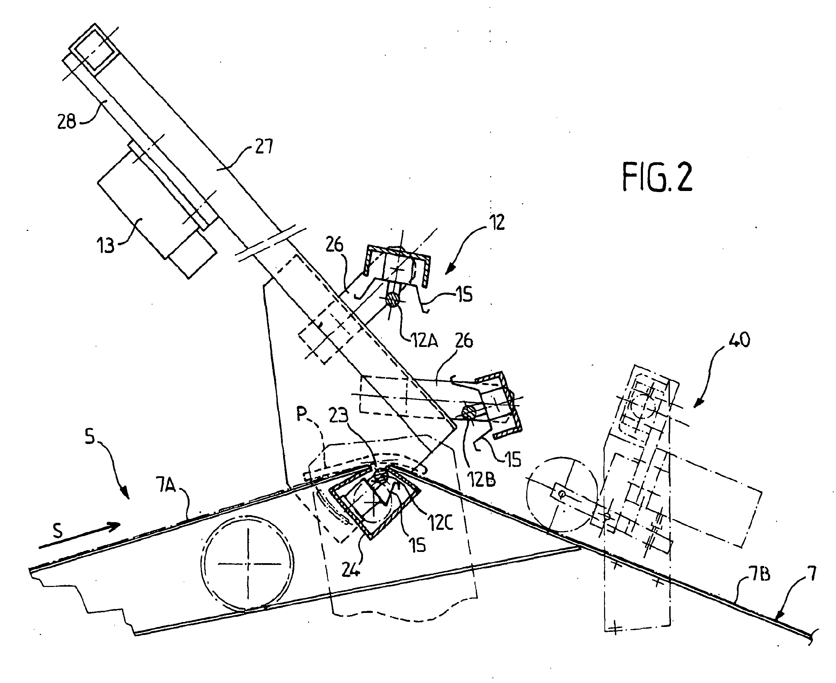

Avantageusement et tel qu'illustré à la figure 2, le moyen d'éclairage supérieur 12A, 12B est formé par deux postes d'éclairage distincts 12A, 12B formant deux luminaires indépendants et séparés, et équipés chacun d'un réflecteur 15.

Le moyen d'éclairage inférieur 12C est avantageusement formé par un seul luminaire pourvu également d'un réflecteur 15.

Grâce à cette particularité, le tapis 7 étant réalisé en une matière plastique translucide ou pourvu d'ouvertures suffisantes pour laisser passer la lumière, on obtient un contraste d'éclairage très prononcé au niveau de la peau P permettant de définir parfaitement aussi bien ses contours que ses défauts quelle que soit la couleur de la peau.

De manière avantageuse, le moyen d'éclairage inférieur 12C, de même que les moyens d'éclairage supérieurs 12A, 12B, sont réglables en intensité.

Avantageusement, la machine comporte également une première zone d'aspiration 20 et une deuxième zone d'aspiration 21 situées respectivement sous le système de défilement 5, i.e. sous le tapis 7, au niveau de la zone de dépose 10, et sous le système de défilement 5 au niveau de la zone de lecture 11 pour assurer l'étalement de l'article P.

De manière classique, les zones d'aspiration 20, 21 sont formées par des caissons sensiblement étanches, montés sous le tapis 7 et liés à un moyen moteur susceptible de créer un flux d'air d'aspiration, à travers le tapis 7 qui est suffisant poreux ou pourvu d'orifices permettant le passage d'un flux d'air d'aspiration.

Selon l'invention, le moyen d'éclairage inférieur 12C est disposé au niveau
ou en regard de la deuxième zone d'aspiration 21.

Grâce à cette disposition, on obtient un excellent positionnement et étalement de l'article à traiter dans la zone de lecture 11, ce qui permet d'améliorer la qualité de la lecture et de l'enregistrement par la caméra 13.

Selon une autre caractéristique intéressante de l'invention, le moyen d'éclairage inférieur 12C est disposé sous le système de défilement 5 et sensiblement au droit d'une partie translucide du système de défilement 5 en forme de fente transversale 23. Cette particularité permet d'améliorer le contraste.

Avantageusement, la deuxième zone d'aspiration 21 est formée par un caisson d'aspiration 24 dans lequel est monté le moyen d'éclairage inférieur 12C avec son réflecteur 15, et dans lequel est ménagée la fente transversale 23, sensiblement sur toute la largeur transversale du tapis 7 et contre la face inférieure de ce dernier.

Tel qu'illustré à la figure 2, le moyen d'éclairage supérieur 12A, 12B est formé par deux postes d'éclairage distincts, respectivement avant 12A et arrière 12B, montés chacun sur un bras articulé 26 sur un support principal 27, supportant la caméra d'enregistrement 13 montée elle-même articulée par le biais d'un bras 28 sur ledit support principal 27. Grâce à ce montage, on obtient une possibilité de réglage relatif de l'éclairage et de l'axe d'enregistrement par la caméra 13.

Tel qu'illustré par exemple aux figures 1 et 2, le système de défilement 5 est avantageusement formé par un tapis formant un convoyeur sans fin 7 présentant une section de montée 7A dont la première partie forme la zone de dépose 10, ladite section de montée 7A étant suivie à partir de son sommet 30 par une zone de descente 7B, elle-même suivie par une section de retour 7C vers la section de montée 7A.

Selon un montage avantageux, la deuxième zone d'aspiration 21, ainsi que la zone de lecture 11, sont disposées sensiblement au niveau dudit sommet 30.

Grâce au changement angulaire que subit la peau P lorsqu'elle passe sur le sommet 30, on obtient un effet d'ouverture de la texture de la peau, ce qui est particulièrement favorable pour obtenir une qualité de lecture optimale par la caméra 13.

De manière avantageuse, la machine selon l'invention telle qu'illustrée à la figure 1, comporte un tapis de retour 31 des articles P vers le poste ou la zone de dépose 10 où se trouve l'opérateur, ledit tapis de retour 31 étant disposé sous la section de retour 7C, pour prendre en sandwich la peau et la déplacer.

Cette particularité permet, une fois la lecture optique de la peau P réalisée, de permettre un retour automatique de la peau vers le poste de l'opérateur sans que ce dernier ait à se déplacer. Une telle disposition favorise donc la productivité tout en diminuant le nombre d'opérateurs.

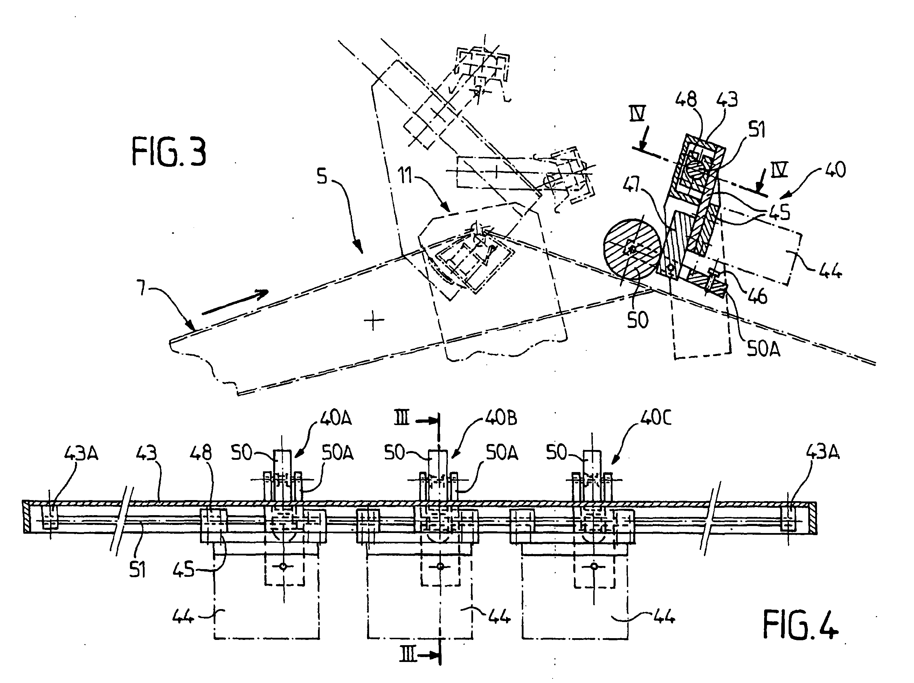

L'invention concerne légalement en tant que tel et indépendamment des autres éléments de l'invention et notamment des moyens d'éclairage 12 et des zones d'aspiration 20, 21, un moyen de mesure de l'épaisseur 40 de l'article (figures 3, 4, 6 et 7).

La connaissance et la mesure fiable de l'épaisseur de l'article P et en particulier de la peau, est un critère qualitatif et physique important d'appréciation et donc de classification de l'article.

Le moyen de mesure de l'épaisseur 40 permet donc de fournir à l'opérateur une information supplémentaire quant à l'épaisseur moyenne de l'article, voire quant à sa variation et distribution sur tout ou partie de la surface de l'article. On obtient ainsi une information sur l'homogénéité ou au contraire l'hétérogénéité de la mesure de l'épaisseur.

Tel qu'illustré aux figures, le moyen de mesure de l'épaisseur 40 est avantageusement monté en aval de la zone de lecture 21, en considération du sens de défilement du système de défilement 5. Grâce à cette disposition, la mesure de l'épaisseur est effectuée à un stade qui n'est pas en mesure d'influencer de manière négative les autres paramètres d'appréciation de la qualité de la peau puisque la mesure de l'épaisseur intervient après l'étape de lecture optique de l'échantillon. La mesure de l'épaisseur est donc effectuée après l'étape de lecture optique au cours de laquelle on éclaire la peau.

De manière avantageuse, une troisième zone d'aspiration 41 (figure 1) est disposée sous le système de défilement 5 et sous le moyen de mesure de l'épaisseur 40.

Grâce à cette disposition, on obtient et on maintient un excellent étalement de la peau P ce qui contribue à obtenir une mesure de l'épaisseur particulièrement facile et fiable.

Selon une variante particulièrement avantageuse, et telle qu'illustrée aux figures, la troisième zone d'aspiration 41 et le moyen de mesure de l'épaisseur 40 sont montés au niveau de la section de descente 7B, après le poste de lecture 11, et de préférence sensiblement juste après.

De manière avantageuse et tel qu'illustré par exemple à la figure 4, le moyen de mesure de l'épaisseur 40 est formé d'au moins deux sous-ensembles de mesure et par exemple de trois sous-ensembles de mesure 40A, 40B, 40C, espacés, les uns par rapport aux autres mais reliés fonctionnellement entre eux, de manière à obtenir plusieurs points de mesure de l'épaisseur. Bien évidemment un nombre plus élevé de sous-ensembles de mesure peut être prévu selon la taille, et en particulier la largeur du convoyeur 7.

Les sous-ensembles de mesure 40A, 40B, 40C sont montés sur une traverse commune 43 s'étendant transversalement au dessus de la section de descente 7B. Avantageusement, chaque sous-ensemble de mesure 40A, 40B, 40C est monté avec une possibilité de réglage de sa position transversale sur ladite traverse et support 43, de telle manière que l'écartement relatif de chaque sous-ensemble peut être réglé et adapté.

Chaque sous-ensemble 40A, 40B, 40C est monté en regard de boîtiers électroniques 44 supportés par une ou deux plaques de reprise 45. Chaque boîtier électronique 44 peut comprendre un potentiomètre linéaire 46 pour assurer le contrôlé de l'épaisseur, chaque sous-ensemble étant relié fonctionnellement aux moyens informatiques d'analyse et de traitement de la machine, de manière à fournir une information en temps réel à l'opérateur.

Chaque sous-ensemble 40A, 40B, 40C est monté sur palier et comprend un palier à roulettes 47 ainsi que des paliers réglables 48, chaque sous-ensemble étant par ailleurs pourvu d'une roulette 50 avec un balancier 50A, la roulette étant destinée à reposer librement sur la peau dont il convient de mesurer l'épaisseur. Une barre cylindrique 51 peut être insérée dans les paliers fixes 43A.

Il est également envisageable de prévoir un système rapide de verrouillage des paliers réglables 48 pour calibrer rapidement l'écartement des roulettes 50 à la largeur de la peau P.

Bien évidemment, la caméra d'enregistrement 13 est reliée fonctionnellement à un système informatique de traitement de l'image transmise.

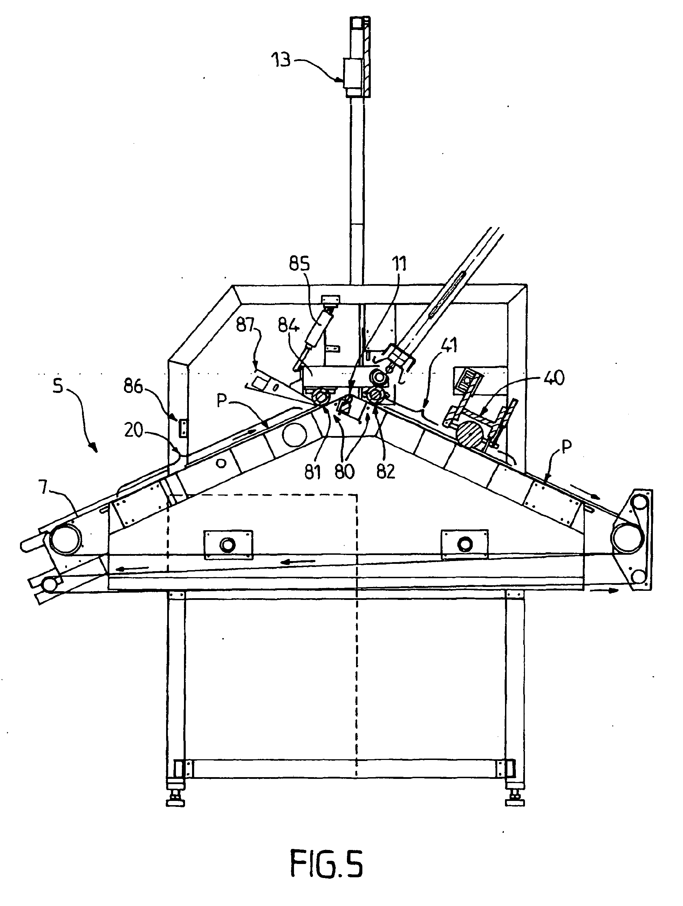

Un mode de réalisation préférentielle de l'invention va maintenant être décrit en se référant aux figures 5 à 7.

Selon ce mode de réalisation préférentielle, la zone de lecture 11 comporte avantageusement une coque 70 sensiblement translucide, disposée sous le système de défilement 5 au niveau de la zone de lecture 1 pour assurer l'étalement de l'article P.

Cette coque 70, par exemple en plastique translucide ou en verre, vient ainsi préférentiellement remplacer la fente transversale 23 et permet, grâce à sa partie supérieure arrondie, d'améliorer l'effet d'ouverture de la texture de la peau P.

La section transversale de la coque 70 est préférentiellement en forme de demi-cercle mais pourrait bien évidemment, sans sortir du cadre de l'invention, être sensiblement asymétrique et présenter un aspect anguleux et discontinu.

De façon préférentielle, la coque 70 est formée par un demi-cylindre en verre, lequel s'étend sur sensiblement toute la largeur du système de défilement 5.

Le moyen d'éclairage inférieur 12C est avantageusement disposé sous le système de défilement 5, sensiblement au droit de la coque 70, et permet un éclairage optimal de la zone de lecture 11 sur sensiblement toute la largeur du tapis 7.

L'éclairage inférieur de l'article P au niveau de la zone de lecture 11, rendu possible par l'utilisation de la coque 70 translucide, permet ainsi d'obtenir un contraste très prononcé entre l'article P et le tapis 7 permettant de bien définir les contours de l'article et ce, quelle que soit sa couleur.

Le moyen d'éclairage supérieur 12B est avantageusement réglable du point de vue de sa hauteur, de sa distance et de son inclinaison angulaire relativement à la zone de lecture 11.

En outre, les moyens d'éclairage inférieur 12C et supérieur 12B sont de préférence réglables en intensité.

Le remplacement de la fente 23 par la coque 70 permet avantageusement de protéger les parties de la machine situées sous le convoyeur, notamment le moyen d'éclairage 12C, de la pollution et de la poussière.

Dans cette variante de réalisation, le caisson d'aspiration 24 est de préférence optionnel. Ainsi, dans ce cas, la machine peut ne comporter que deux zones d'aspiration, à savoir une première zone 20 d'aspiration située sous le système de défilement 5 avant la zone de lecture 11, et une deuxième zone d'aspiration 41 disposée sous le système de défilement 5 et sous le moyen de mesure de l'épaisseur 40.

La deuxième zone d'aspiration 41 correspond ainsi à la troisième zone d'aspiration mentionnée précédemment lorsque la machine est pourvue de la fente transversale 23 et du caisson d'aspiration 24.

Bien évidemment, il est possible de combiner la coque 70 et la fente transversale 23, cette dernière s'étendant alors sur sensiblement toute la longueur de la coque 70.

Selon la variante préférentielle de réalisation illustrée sur les figures 5 à 7, la machine comporte des moyens d'étalement 80 de l'article P, de préférence situés de part et d'autre de la zone de lecture 11 pour assurer l'étalement, c'est-à-dire la mise à plat de l'article P dans cette zone.

Avantageusement, les moyens d'étalement 80 sont formés par un cylindre amont 81, disposé, en considération du sens de défilement S de l'article P, en amont de la zone de lecture 11, et par un cylindre aval 82 disposé, en considération du sens de défilement S, en aval de ladite zone de lecture 11, les cylindres amont et aval 81, 82 étant adaptés pour venir en appui rotatif sur l'article P, de manière à assurer l'étalement et la mise en tension de ce dernier.

Les cylindres amont et aval 81, 82 sont ainsi avantageusement disposés de part et d'autre de la zone de lecture 11, précisément de part et d'autre de la coque 70, de manière à améliorer l'étalement de la peau P lorsque cette dernière passe sur la partie arrondie de la coque 70 dans la zone de lecture 11 de la caméra 13.

Le cylindre amont 81 et le cylindre aval 82 s'étendent sur sensiblement toute la largeur du système de défilement 5, et comportent avantageusement une brosse 83, formant l'enveloppe externe des cylindres 81, 82.

La brosse 83 est de préférence formée par deux enroulements hélicoïdaux avec des sens de rotation opposés.

Le cylindre amont 81 est avantageusement agencé de manière à tourner suivant un sens de rotation S1 opposé par rapport au sens de défilement S du convoyeur 7, et avec une vitesse tangentielle supérieure en valeur absolue à la vitesse de défilement du convoyeur.

A l'inverse, le cylindre aval 82 est adapté pour tourner dans un sens de rotation S2 correspondant au sens de défilement S du convoyeur 7, mais avec une vitesse tangentielle supérieure à celle du convoyeur.

L'action combinée des cylindres amont et aval 81, 82 permet ainsi d'assurer d'une part l'étalement optimal de l'article P sur sensiblement toute la largeur du convoyeur. 7 et d'autre part la mise en tension longitudinale de l'artide P lorsque ce dernier passe sur la partie arrondie de la coque 70.

Les cylindres 81, 82 sont avantageusement montés sur des bras articulés 84 permettant leur actionnement et notamment leur déplacement vertical à l'aide de vérins 85.

Lorsque la machine n'est pas utilisée, les bras 84 sont préférentiellement en position relevée. La machine comporte avantageusement un capteur 86, disposé sensiblement en amont de la zone de lecture 11, et adapté pour détecter la présence ou l'absence de l'article P sur le convoyeur 7. Ainsi, dès que le capteur 86 détecte la présence de l'article P sur le convoyeur 7, un signal est transmis au système d'actionnement des cylindres 81, 82, et les bras 84 amènent le cylindre amont 81 vers le convoyeur 7.

De façon particulièrement avantageuse, les cylindres 81, 82 et précisément les brosses 83 ont également un rôle de nettoyage de l'article P, et permettent en particulier d'éliminer la poussière susceptible d'être retenue sur ce dernier.

A cet effet, la machine comporte une buse aspirante 87 destinée à évacuer la poussière éventuellement soulevée par le cylindre amont 81 lors de sa rotation sur l'article P.

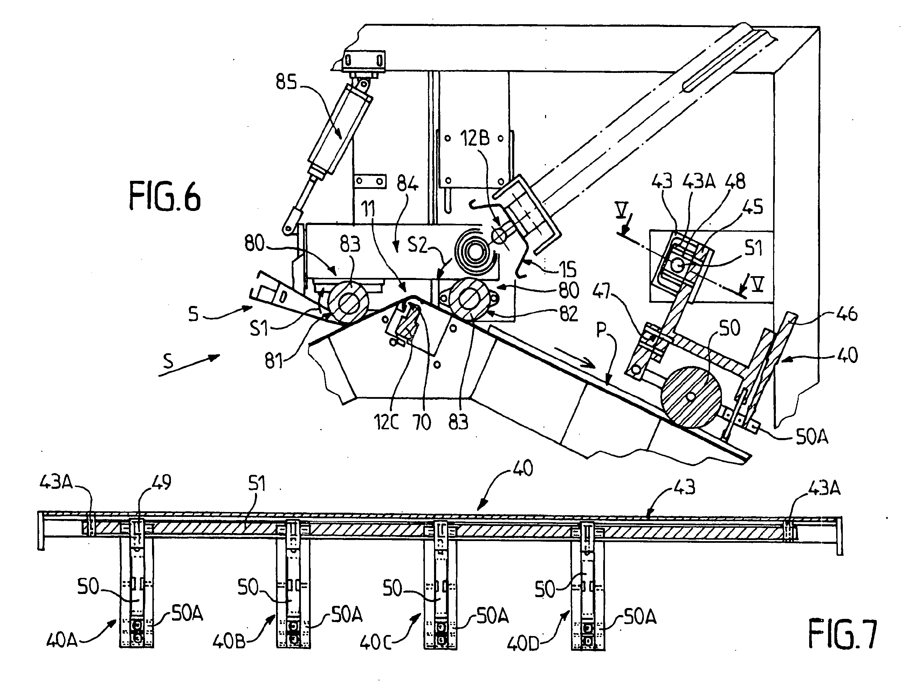

Selon une variante préférentielle de l'invention, et indépendamment des dispositifs situés dans la zone de lecture 11, le moyen de mesure de l'épaisseur 40 est formé par 4 sous-ensembles de mesures 40A, 40B, 40C, 40D, espacés et reliés fonctionnellement entre eux de manière à obtenir plusieurs points de mesure (figure 7).

De façon préférentielle, l'un des sous-ensembles de mesure 40D, situé vers l'une des extrémités de la traverse 43, est destiné à servir de référence pour les autres sous-ensemble de mesure 40A, 40B, 40C. A cet effet, la roue 50 du sous-ensemble de mesure 40D est destinée à reposer librement sur le tapis 7 pour mesurer l'épaisseur de ce dernier.

Dans le même temps, les roues 50 des autres sous-ensembles de mesure 40A, 40B, 40C reposent sur la peau P de manière à mesurer l'épaisseur cumulée de l'article P et du tapis 7.

La différence entre les mesures effectuées par les trois sous-ensembles de mesure 40A, 40B, 40C et la mesure effectuée par le sous-ensemble 40D permet ainsi d'obtenir une mesure très précise (au dixième de millimètre près) de l'épaisseur réelle de l'article P.

De façon particulièrement avantageuse, la machine comporte un système rapide de verrouillage 49 des paliers réglables 48 permettant de calibrer rapidement l'écartement des roulettes 50 à la largeur de la peau P d'une part et du tapis 7 d'autre part.

L'invention concerne également un procédé de détection et reconnaissance des défauts présents à la surface de peaux de tannerie dans lequel:
- on assure l'éclairage de la surface de la peau et on enregistre l'image de la peau par une caméra,
- puis on traite et analyse les informations et signaux formant l'image transmises par la caméra à l'aide d'un système informatique de traitement et d'analyse, pour détecter et reconnaître les défauts de la peaux.

Selon l'invention, le procédé est caractérisé en ce que:
- on utilise une caméra haute résolution; de préférence en niveau de gris,
- et on éclaire la peau par le dessus et le dessous, à travers le système de défilement 7, pour constituer un fond d'image représentant le niveau blanc, de manière à détecter le contour extérieur et les trous de la peau par différence de niveau de luminosité entre la peau et le fond de l'image.

Grâce à cette caractéristique d'éclairage, on obtient un contraste très prononcé avec le tapis 7 permettant de bien définir les contours et les défauts de surface (trous par exemple de la peau par contraste prononcé avec le tapis 7 poreux et translucide éclairé représentant le niveau blanc alors que la peau présente un niveau coloré allant du gris clair au gris sombre par exemple.

La caméra 13 utilisée sera avantageusement une caméra haute résolution (5000 X 5000 pixels) en niveau de gris.

Par la suite, à partir de la détermination du contour de la peau on extrapole sa surface utile. Cette détermination est effectuée par extrapolation des zones du contour vers l'intérieur de la peau. Au préalable, on a procédé à une segmentation du contour extérieur en cinq zones principales (collet, flanc, patte avant, patte arrière, culée) par la détection du sommet des pattes et de leur largeur.

De manière générale, on détecte les défauts de surface par différences de niveaux de luminosité de gris, puis on évalue leur surface et on calcule enfin un ratio de surface disponible sans défaut.

La détection des défauts de piqûres s'effectue par analyse de l'image fournie par la caméra 13 avec un gradient 7 X 7 de la partie utile de la peau.

La détection des défauts de rides s'effectue par analyse spectrale des niveaux de gris dans des direction proche de l'échine.

Par la suite, on calcule pour chaque type de défaut repéré le ratio de surface disponible, le ratio étant calculé entre la surface cumulée des défauts du type considéré et de la surface de la zone utile repérée.

Il est également envisageable de déterminer la surface du plus grand défaut pour chaque type de défaut repéré.

Le calcul du ratio de surface disponible sans défaut est effectué par zone de surface spécifique préalablement défini, tels que le collet, le flanc, les pattes avant, les pattes arrières et culée ou de manière générale.

Enfin, on effectue la classification automatique de la peau par analyse et comparaison des ratios de surface disponible par rapport aux valeurs critères renseignées par le responsable de production. En d'autres termes, on effectue une classification automatique de la peau à partir des ratios de surface obtenus par comparaison avec des valeurs-critères renseignées pré-établies.

En plus de la détection des défauts de la peau, et de la nature et de la répartition de ces défauts, le procédé conforme à l'invention comporte une étape de détermination de l'épaisseur moyenne de la peau. Ceci fournit un élément supplémentaire d'appréciation et de classement de la peau.

L'étape de détermination de l'épaisseur de la peau intervient après l'étape de lecture optique au cours de laquelle on éclaire la peau par le dessus et le dessous, préalablement à l'enregistrement de la peau éclairée par la caméra 13.

Le fonctionnement de la machine est le suivant.

L'opérateur alimente le système de défilement en déposant sur le tapis 7, au niveau de la zone de dépose 10 une peau individuelle. Pour faciliter la mise en place de la peau sur le tapis 7, et afin de faciliter l'établissage, c'est-à-dire l'étalement parfait de la peau, il est possible de prévoir à l'entrée de la zone de dépose 10 une barre 60, par exemple en forme de U ou de forme générale arrondie et courbe, montée mobile entre deux positions de butée sur le châssis de manière à bloquer dès la zone de dépose.

L'établissage optimal de la peau P est amélioré grâce à l'aspiration provoquée par la première zone d'aspiration 20, de telle manière qu'au fur et à mesure de l'avancement du système de défilement 7, la peau est progressivement, parfaitement plaquée sur le tapis 7 au niveau de la section de montée 7A. Avantageusement, le tapis 7 est pourvu d'orifices dont la disposition géométrique est agencée pour faciliter l'étalement de la peau dans toutes les directions de l'espace, et en particulier en direction transversale. A cette fin, les orifices peuvent s'étendre avantageusement en chevrons en considération du sens de défilement S.

La peau arrive ensuite automatiquement à la zone de lecture optique 11 où elle est éclairée complètement au dessus et en dessous en passant sur la fente 23 ou sur la coque 70. La caméra 13 procède alors à l'enregistrement, les différents paramètres d'appréciation de la peau étant alors retransmis à l'opérateur par l'intermédiaire de l'écran 14. Dès cet instant, l'opérateur peu procéder à la classification de la peau et déterminer dans quelles catégories il souhaite la classer. Avantageusement, la peau peut ensuite faire l'objet d'une étape de mesure de son épaisseur dont la valeur est alors également retransmise à l'opérateur tout en étant enregistrée.

Ceci donne à l'opérateur une valeur supplémentaire pouvant intervenir dans la classification de la peau. La peau poursuit ensuite son trajet sur la section de descente 7B puis est dirigée automatiquement vers le tapis de retour 31
où elle parvient à l'opérateur qui peut alors déposer dans le tas correspondant au groupe de qualité qu'il a déterminé pour la peau qui vient de subir les différentes mesures.

Un nouveau cycle d'appréciation automatique peut alors débuter, étant entendu que l'opérateur peut ne pas attendre le retour de la peau vers lui pour déposer une nouvelle peau, dès la lecture optique effectuée.

### POSSIBILITE D'APPLICATION INDUSTRIELLE

L'invention trouve son application industrielle dans la conception et la fabrication de machines d'appréciation automatique de l'état de surface d'articles de tannerie.

## Revendications

1. - Machine d'appréciation automatique selon des critères qualitatifs, de l'état de surface d'articles non rigides et sensiblement plats, du genre articles textiles ou de tannerie, avec un bâti principal (1) comprenant un système de défilement (5) de l'article (P) comportant une zone de dépose (10) de l'article, en aval de laquelle, en considération du sens de défilement dudit système, se trouve une zone de lecture optique (11) de l'état de surface d'au moins une portion de l'article (P), ladite zone (11) étant associée à des moyens d'éclairage (12) et à une caméra d'enregistrement (13), ladite caméra (13) étant reliée fonctionnellement à des moyens informatiques d'analyse et de traitement du signal et des informations enregistrées par la caméra (13), **caractérisée en ce que** le système de défilement (5) comporte un tapis (7) translucide et / ou pourvu d'ouvertures suffisantes pour laisser passer la lumière, lesdits moyens d'éclairage (12) comportant d'une part un moyen d'éclairage supérieur (12A, 12B) apte à éclairer la surface supérieure de l'article (P), et d'autre part un moyen d'éclairage inférieur (12C) apte à éclairer la face inférieure de l'article (P), de manière à obtenir un contraste d'éclairage prononcé avec le tapis (7), ledit tapis (7) formant un convoyeur sans fin (7) présentant une section de montée (7A) dont la première partie forme la zone de dépose (10), ladite section de montée étant suivie à partir de son sommet (30) par une section de descente (7B), pour que l'article (P) subisse un changement angulaire lorsqu'il passe sur le sommet (30) de manière à obtenir un effet d'ouverture de texture de l'article (P), la zone de lecture (11) étant disposée sensiblement au niveau dudit sommet (30).

2. - Machine selon la revendication 1 **caractérisée en ce que** la section de descente (7B) est suivie d'une section de retour (7C) vers la section de montée (7A).

3. - Machine selon la revendication 1 ou 2 **caractérisée en ce qu'**elle comporte une première zone (20) d'aspiration située sous le système de défilement (5) au niveau de la zone de dépose (10) pour assurer l'étalement de l'article (P).

4. - Machine selon l'une des revendications 1 à 3 **caractérisée en ce que** la zone de lecture (11) comporte une coque (70) sensiblement translucide, disposée sous le système de défilement (5) pour assurer l'étalement de l'article (P), le moyen d'éclairage inférieur (12C) étant disposé sous le système de défilement (5) et sensiblement au droit de la coque (70).

5. - Machine selon la revendication 4 **caractérisée en ce qu'**elle comporte des moyens d'étalement (80) de l'artide (P), destinés à assurer l'étalement de ce dernier au niveau de la zone de lecture (11), et situés de préférence de part et d'autre de ladite zone de lecture (11).

6. - Machine selon la revendication 5 **caractérisée en ce que** les moyens d'étalement (80) sont formés par un cylindre amont (81), disposé en amont de la zone de lecture (11) et un cylindre aval (82), disposé en aval de la zone de lecture (11), et adaptés pour venir, en appui rotatif sur l'article (P) de manière à assurer l'étalement et la mise en tension de ce dernier.

7. - Machine selon la revendication 6 **caractérisée en ce que** le cylindre amont (81) et le cylindre aval (82) comportent chacun une brosse (83).

8. - Machine selon l'une des revendications précédentes **caractérisée en ce qu'**elle comporte une deuxième zone (21) d'aspiration située sous le système de défilement (5) au niveau de la zone de lecture (11) pour assurer l'étalement de l'article (P).

9. - Machine selon la revendication 8 **caractérisée en ce que** le moyen d'éclairage inférieur (12C) est disposé sous le système de défilement (5) et sensiblement au droit d'une partie translucide du système de défilement (5) en forme de fente transversale (23).

10. - Machine selon la revendication 9 **caractérisée en ce que** la deuxième zone (21) d'aspiration est formée par un caisson d'aspiration (24), dans lequel est monté le moyen d'éclairage inférieur (12C), et dans lequel est ménagée la fente transversale (23).

11. -Machine selon l'une des revendications 1 à 10 **caractérisée en ce que** le moyen d'éclairage supérieur (12) est formé par deux postes d'éclairage (12A, 12B) distincts, respectivement avant (12A) et arrière (12B), montés chacun sur un bras (26) articulé sur un support principal (27) supportant la caméra d'enregistrement (13), montée elle-même articulée sur ledit support principal (27).

12. -Machine selon la revendication 2 **caractérisée en ce qu'**elle comporte un tapis de retour (31) des articles (P) vers le poste de dépose (10), ledit tapis de retour (31) étant disposé sous la section de retour (7C).

13. -Machine selon l'une des revendications 1 à 12 **caractérisée en ce qu'**elle comprend un moyen de mesure de l'épaisseur (40) de l'article.

14. -Machine selon la revendication 13 **caractérisée en ce que** le moyen de mesure de l'épaisseur (40) est monté en aval de la zone de lecture (11), en considération du sens de défilement du système de défilement (5).

15. -Machine selon l'une des revendications 13 ou 14 **caractérisée en ce qu'**une troisième zone d'aspiration (41) est disposée sous le système de défilement (5) et sous le moyen de mesure de l'épaisseur (40).

16. machine selon la revendication 15 **caractérisée en ce que** la troisième zone d'aspiration (41) et le moyen de mesure de l'épaisseur (40) sont montés au niveau de la section de descente (7B), après la zone de lecture (11).

17. - Machine selon l'une des revendications 13 à 16 **caractérisée en ce que** le moyen de mesure de l'épaisseur (40) est formé d'au moins deux sous-ensembles de mesure, de préférence quatre (40A, 40B, 40C, 40D), espacés mais reliés fonctionnellement entre eux, de manière à obtenir plusieurs points de mesure.

18. - Machine selon la revendication 17 **caractérisée en ce que** les sous-ensembles de mesure (40A, 40B, 40C, 40D) sont montés sur une traverse commune (43) avec possibilité de réglage de leur écartement, ladite traverse (43) s'étendant transversalement au-dessus du système de défilement (5).

19. - Machine selon l'une des revendications 1 à 18 **caractérisée en ce que** la caméra d'enregistrement (13) est reliée fonctionnellement à un système informatique de traitement de l'image transmise.

20. - Machine selon l'une des revendications 1 à 19 **caractérisée en ce qu'**elle est constituée d'une machine à apprécier automatiquement la qualité des peaux issues de tanneries.

21. - Procédé de détection et reconnaissance des défauts présents à la surface de peaux de tanneries, dans lequel:
- on assure l'éclairage de la surface de la peau (P) et on enregistre l'image de la peau (P) par une caméra (13),
- puis on traite et analyse les informations et signaux formant l'image transmise par la caméra à l'aide d'un système informatique de traitement et d'analyse, pour détecter et reconnaître les défauts de la peau (P),
**caractérisé en ce que**
- on utilise une caméra (13) haute résolution en niveaux de gris,
- on éclaire la peau (P) par le dessus et le dessous à travers un tapis translucide (7) pour constituer un fond d'image représentant le niveau blanc, de manière à détecter le contour extérieur et les trous de la peau (P) par contraste prononcé avec le tapis (7) translucide éclairé représentant le niveau blanc, ledit tapis (7) formant un convoyeur sans fin (7) présentant une section de montée (7A) dont la première partie forme la zone de dépose (10), ladite section de montée étant suivie à partir de son sommet (30) par une section de descente (78), pour que la peau (P) subisse un changement angulaire lorsqu'elle passe sur le sommet (30) de manière à obtenir un effet d'ouverture de texture de la peau (P), la zone de lecture (11) étant disposée sensiblement au niveau dudit sommet (30).

22. - Procédé selon la revendication 21 **caractérisée en ce que** la section de descente (7B) est suivie d'une section de retour (7C) vers la section de montée (7A).

23. - Procédé selon la revendication 21 ou 22 **caractérisé en ce qu'**à partir de la détermination du contour de la peau (P) on extrapole sa surface utile.

24. procédé selon la revendication 23 **caractérisé en ce qu'**on détecte les défauts de surface par différence de niveau de luminosité de gris, on évalue leur surface, et on calcule un ratio de surface disponible sans défaut.

25. - Procédé selon la revendication 24 **caractérisé en ce que** le calcul du ratio de surface disponible sans défaut est effectué par zones de surfaces spécifiques, préalablement définies, ou de manière générale.

26. - Procédé selon l'une des revendications 21 à 25 **caractérisé en ce qu'**on détermine la surface du plus grand défaut de la peau (P) pour chaque type de défaut préalablement défini.

27. - procédé selon l'une des revendications 24 à 26 **caractérisé en ce qu'**on effectue une classification automatique de la peau (P) à partir des ratios de surfaces obtenus par comparaison avec des valeurs critères renseignées pré-établies.

28. - Procédé selon l'une des revendications 21 à 27 **caractérisé en ce que** l'on détermine l'épaisseur de la peau (P).

29. -Procédé selon la revendication 28 **caractérisé en ce que** l'on détermine l'épaisseur de la peau (P) après l'étape de lecture optique au cours de laquelle on éclaire la peau (P).

30. - Système de défilement (5) et d'éclairage d'un article (P) non rigide et sensiblement plat, du genre article textile ou de tannerie, comprenant :
- un tapis (7) translucide et/ou pourvu d'ouvertures suffisantes pour laisser passer la lumière, ledit tapis (7) étant pourvu d'une zone de dépose (10) de l'article (P), ledit tapis (7) formant un convoyeur sans fin (7) présentant une section de montée (7A) dont la première partie forme la zone de dépose (10), ladite section de montée étant suivie à partir de son sommet (30) par une section de descente (7B), pour que l'article (P) subisse un changement angulaire lorsqu'il passe sur le sommet (30) de manière à obtenir un effet d'ouverture de texture de l'article (P), la zone de lecture (11) étant disposée sensiblement au niveau dudit sommet (30),
- des moyens d'éclairage (12), en aval de ladite zone de dépose (10) en considération du sens de défilement du système, comportant d'une part un moyen d'éclairage supérieur (12A, 12B), apte à éclairer la surface supérieure de l'article (P), et d'autre part un moyen d'éclairage inférieur (12C) apte à éclairer la face inférieure de l'article (P), de manière à obtenir un contraste prononcé entre l'article (P) et le tapis (7) éclairé.

31. -Système selon la revendication 30 **caractérisée en ce que** la section de descente (7B) est suivie d'une section de retour (7C) vers la section de montée (7A).

## Claims

1. Machine for the automatic assessment, according to qualitative criteria, of the surface state of non-rigid, substantially flat articles, of the textile or tannery article type, with a main frame (1) comprising a system (5) for travel of the article (P), comprising an area (10) for depositing the article, downstream of which, considering the direction of travel of the said system, there is situated an area (11) for the optical reading of the surface state of at least a portion of the article (P), the said area (11) being associated with illumination means (12) and a recording camera (13), said camera (13) being functionally connected to computer means for analysing and processing the signal and information recorded by the camera (13), **characterised in that** the travel system (5) comprises a translucent belt (7) and/or one provided with sufficient openings to allow light to pass, the said illumination means (12) comprising a top illumination means (12A, 12B) able to illuminate the top surface of the article (P), and a bottom illumination means (12C) able to illuminate the bottom face of the article (P), so as to obtain a pronounced lighting contrast with the belt (7), the said belt (7) forming an endless conveyor (7) having a rising section (7A) the first part of which forms the depositing area (10), the said rising section being followed as from its top (30) by a descent section (7B), so that the article (P) undergoes an angular change when it passes over the top (30) so as to obtain an effect of opening the texture of the article (P), the reading area (11) being disposed substantially at the said top (30).

2. Machine according to claim 1, **characterised in that** the descent section (7B) is followed by a section (7C) for return to the rising section (7A).

3. Machine according claim 1 or 2, **characterised in that** it comprises a first suction area (20) situated under the travel system (5) at the depositing area (10) in order to ensure that the article (P) is spread.

4. Machine according to one of claims 1 to 3, **characterised in that** the reading area (11) comprises a substantially translucent shell (70), disposed under the travel system (5) in order to ensure the spread of the article (P), the bottom illumination means (12C) being disposed under the travel system (5) and substantially in line with the shell (70).

5. Machine according to claim 4, **characterised in that** it comprises means (80) of spreading the article (P), intended to ensure the spreading of the latter at the reading area (11), and preferably situated on either side of the said reading area (11).

6. Machine according to claim 5, **characterised in that** the spreading means (80) are formed by an upstream cylinder (81), disposed upstream of the reading area (11), and a downstream cylinder (82) disposed downstream of the reading area (11), and both adapted to come into rotary abutment on the article (P) so as to ensure the spreading and tensioning of the latter.

7. Machine according to claim 6, **characterised in that** the upstream cylinder (81) and the downstream cylinder (82) each comprise a brush (83).

8. Machine according to one of the preceding claims, **characterised in that** it comprises a second suction area (21) situated under the travel system (5) at the reading area (11) in order to ensure the spreading of the article (P).

9. Machine according to claim 8, **characterised in that** the bottom illumination means (12C) is disposed under the travel system (5) and substantially in line with a translucent part of the travel system (5) in the form of a transverse slot (23).

10. Machine according to claim 9, **characterised in that** the second suction area (21) is formed by a suction chamber (24), in which the bottom illumination means (12C) is mounted and in which the transverse slot (23) is provided.

11. Machine according to one of claims 1 to 10, **characterised in that** the top illumination means (12) is formed by two distinct illumination stations (12A, 12B), respectively front (12A) and rear (12B), each mounted on an arm (26) articulated on a main support (27) supporting the recording camera (13), itself mounted articulated on the said main support (27).

12. Machine according to claim 2, **characterised in that** it comprises a belt (31) for returning the articles (P) to the depositing station (10), the said return belt (31) being disposed under the return section (7C).

13. Machine according to one of claims 1 to 12, **characterised in that** it comprises a means (40) of measuring the thickness of the article.

14. Machine according to claim 13, **characterised in that** the thickness measuring means (40) is mounted downstream of the reading area (11), considering the direction of travel of the travel system (5).

15. Machine according to one of the claims 13 or 14, **characterised in that** a third suction area (41) is disposed under the travel system (5) and under the thickness measuring means (40).

16. Machine according to claim 15, **characterised in that** the third suction zone (41) and the thickness measuring means (40) are mounted at the descent section (7B), after the reading area (11).

17. Machine according to one of claims 13 to 16, **characterised in that** the thickness measuring means (40) is formed by at least two measuring subassemblies, preferably four (40A, 40B, 40C, 40D), spaced apart but functionally connected together, so as to obtain several measuring points.

18. Machine according to claim 17, **characterised in that** the measuring subassemblies (40A, 40B, 40C, 40D) are mounted on a common crossmember (43) with the possibility of adjustment of their separation, the said crossmember (43) extending transversely above the travel system (5).

19. Machine according to one of claims 1 to 18, **characterised in that** the recording camera (13) is functionally connected to a computer system for processing the image transmitted.

20. Machine according to one of claims 1 to 19, **characterised in that** it consists of a machine for automatically assessing the quality of the hides coming from tanneries.

21. Method for detecting and recognising defects present on the surface of tannery hides, in which:
- the surface of the hide (P) is illuminated and the image of the hide (P) is recorded by a camera (13),
- then the information and signals forming the image transmitted by the camera are processed and analysed by means of a processing and analysis computer system, for detecting and recognising the defects on the hide (P),
**characterised in that**
- use is made of a high-resolution camera (13) in levels of grey,
- the hide (P) is illuminated from above and below through a translucent belt (7) in order to form an image background representing the white level, so as to detect the external contour and the holes in the hide (P) by pronounced contrast with the illuminated translucent belt (7) representing the white level, the said belt (7) forming an endless conveyor (7) having a rising section (7A) the first part of which forms the depositing area (10), the said rising section being followed as from its top (30) by a descent section (7B), so that the article (P) undergoes an angular change when it passes over the top (30) so as to obtain an effect of opening the texture of the article (P), the reading area (11) being disposed substantially at the said top (30).

22. Method according to claim 21, **characterised in that** the descent section (7B) is formed by a section (7C) returning to the rising section (7A).

23. Method according to claim 21 or 22, **characterised in that**, from the determination of the contour of the hide (P), its useful surface is extrapolated.

24. Method according to claim 23, **characterised in that** the surface defects are detected by difference in level of grey brightness, their surface is assessed, and a defect-free available surface ratio is calculated.

25. Method according to claim 24, **characterised in that** the defect-free available surface ratio is calculated by means of specific surface areas, previously defined, or in a general manner.

26. Method according to one of claims 21 to 25, **characterised in that** the surface area of the largest defect on the hide (P) is determined for each type of defect previously defined.

27. Method according to one of claims 24 to 26, **characterised in that** an automatic classification of the hide (P) is carried out from the surface ratios obtained by comparison with pre-established criteria values given.

28. Method according to one of claims 21 to 27, **characterised in that** the thickness of the hide (P) is determined.

29. Method according to claim 28, **characterised in that** the thickness of the hide (P) is determined after the optical reading step during which the hide (P) is illuminated.

30. System (5) for the travel and illumination of a non-rigid and substantially flat article (P), of the textile or tannery article type, comprising:
- a belt (7) that is translucent and/or provided with sufficient openings to allow light to pass, the said belt (7) being provided with an area (10) for depositing the article (P), the said belt (7) forming an endless conveyor (7) having a rising section (7A) the first part of which forms the depositing area (10), the said rising section being followed from its top (30) by a descent section (7B), so that the article (P) undergoes an angular change when it passes over the top (30) so as to obtain an effect of opening the texture of the article (P), the reading area (11) being disposed substantially at the said top (30),
- illumination means (12), downstream of the said depositing area (10) considering the direction of travel of the system, comprising a top illumination means (12A, 12B) able to illuminate the top surface of the article (P) and a bottom illumination means (12C) able to illuminate the bottom face of the article (P) so as to obtain a pronounced contrast between the article (P) and the illuminated belt (7).

31. System according to claim 30, **characterised in that** the descent section (7B) is followed by a section (7C) returning to the rising section (7A).

## Patentansprüche

1. Maschine zur automatischen Beurteilung nach qualitativen Kriterien des Zustands der Oberfläche nicht starrer und im Wesentlichen flacher Gegenstände, von der Art textiler Gegenstände oder von Gegenständen der Gerberei, mit einem Hauptrahmen (1), umfassend ein System (5) zum Durchlaufenlassen des Gegenstands (P), welches einen Bereich (10) zum Einlegen des Gegenstands aufweist, wobei sich bandabwärts desselben, bezogen auf die Durchlaufrichtung des Systems, ein optischer Abtastbereich (11) des Zustands der Oberfläche wenigstens eines Abschnitts des Gegenstands (P) befindet, wobei der Bereich (11) mit Beleuchtungsmitteln (12) und mit einer Aufzeichnungskamera (13) in Verbindung steht, wobei die Kamera (13) funktional verbunden ist mit datentechnischen Mitteln zur Analyse und Verarbeitung des Signals und der Informationen, die durch die Kamera (13) aufgezeichnet werden, **dadurch gekennzeichnet, dass** das Durchlaufsystem (5) ein Band (7) aufweist, welches lichtdurchlässig ist und/oder mit Öffnungen versehen, die ausreichen, um das Licht durchzulassen, wobei die Beleuchtungsmittel (12) auf der einen Seite ein oberes Beleuchtungsmittel (12A, 12B) umfassen, geeignet, die obere Fläche des Gegenstands (P) zu beleuchten, und auf der anderen Seite ein unteres Beleuchtungsmittel (12C), geeignet, die untere Fläche des Gegenstands (P) zu beleuchten, um so einen deutlichen Beleuchtungskontrast zu dem Band (7) zu erreichen, wobei das Band (7) ein endloses Förderband (7) bildet, welches einen ansteigenden Abschnitt (7A) aufweist, dessen erster Teil den Einlegebereich (10) bildet, wobei auf den ansteigenden Abschnitt von dessen höchstem Punkt (30) aus ein abfallender Abschnitt (7B) folgt, derart, dass der Gegenstand (P) eine Winkeländerung erfährt, während er über den höchsten Punkt (30) geht, um so einen Effekt der Öffnung der Struktur des Gegenstands (P) zu erreichen, wobei der Abtastbereich (11) im Wesentlichen auf dem Niveau des höchsten Punkts (30) angeordnet ist.

2. Maschine nach Anspruch 1, **dadurch gekennzeichnet, dass** auf den abfallenden Abschnitt (7B) ein rückführender Abschnitt (7C) folgt, hin zu dem ansteigenden Abschnitt (7A).

3. Maschine nach Anspruch 1 oder 2, **dadurch gekennzeichnet, dass** sie einen ersten Ansaugbereich (20) aufweist, welcher sich unter dem Durchlaufsystem (5) befindet, auf den Niveau des Einlegebereichs (10), um das Aufbreiten des Gegenstands (P) sicherzustellen.

4. Maschine nach einem der Ansprüche 1 bis 3, **dadurch gekennzeichnet, dass** der Abtastbereich (11) ein im Weseitlichen lichtdurchlässiges Halbrohr (70) aufweist, welches unter dem Durchlaufsystem (5) angeordnet ist, um das Aufbreiten des Gegenstands (P) sicherzustellen,
wobei das untere Beleuchtungsmittel (12C) unter dem Durchlaufsystem (5) und im Wesentlichen gerade unterhalb des Halbrohrs (70) angeordnet ist.

5. Maschine nach Anspruch 4, **dadurch gekennzeichnet, dass** sie Mittel (80) zum Aufbreiten des Gegenstands (P) aufweist, welche dazu bestimmt sind, das Aufbreiten des Letzteren auf dem Niveau des Abtastbereichs (11) sicherzustellen, und welche sich vorzugsweise auf der einen und der anderen Seite des Abtastbereichs (11) befinden.

6. Maschine nach Anspruch 5, **dadurch gekennzeichnet, dass** die Aufbreitungsmittel (80) durch eine Walze bandaufwärts (81), bandaufwärts des Abtastbereichs (11) angeordnet, und eine Walze bandabwärts (82), bandabwärts des Abtastbereichs (11) angeordnet, ausgebildet sind, und angepasst, durch Drehung unterstützen auf den Gegenstand (P) zu wirkten, um so das Aufbreiten und das Aufspannen des Letzteren sicherzustellen.

7. Maschine nach Anspruch 6, **dadurch gekennzeichnet, dass** die Walze bandaufwärts (81) und die Walze bandabwärts (82) je eine Bürste (83) aufweisen.

8. Maschine nach einem der vorhergehenden Ansprüche, **dadurch gekennzeichnet, dass** sie einen zweiten Ansaugbereich (21) aufweist, welcher sich unter dem Durchlaufsystem (5) auf dem Niveau des Abtastbereichs (11) befindet, um das Aufbreiten des Gegenstands (P) sicherzustellen.

9. Maschine nach Anspruch 8, **dadurch gekennzeichnet, dass** das untere Beleuchtungsmittel (12C) unter dem Durchlaufsystem (5) angeordnet ist, und im Wesentlichen gerade unterhalb eines lichtdurchlässigen Teils des Durchlaufsystems (5) von der Form eines transversalen Spalts (23).

10. Maschine nach Anspruch 9, **dadurch gekennzeichnet, dass** der zweite Ansaugbereich (21) durch einen Ansaugkasten (24) ausgebildet ist, in welchem das untere Beleuchtungsmittel (12C) befestigt ist, und in welchem der transversale Spalt (23) ausgeführt ist.

11. Maschine nach einem der Ansprüche 1 bis 10, **dadurch gekennzeichnet, dass** das obere Beleuchtungsmittel (12) durch zwei unterschiedliche Beleuchtungsstationen (12A, 12B) ausgebildet ist, eine weiter vorne (12A) und eine weiter hinten (12B), wobei jede an einem Arm (26) befestigt ist, welcher gelenkig mit einem Hauptträger (27) verbunden ist, der die Aufzeichnungskamera (13) trägt, welche ihrerseits gelenkig an dem Hauptträger (27) befestigt ist.

12. Maschine nach Anspruch 2, **dadurch gekennzeichnet, dass** sie ein Band (31) zum Rückführen der Gegenstände (P) aufweist, hin zu der Einlegestation (10), wobei das rückführende Band (31) sich unter dem rückführenden Abschnitt (7C) befindet.

13. Maschine nach einem der Ansprüche 1 bis 12, **dadurch gekennzeichnet, dass** sie ein Mittel (40) zum Messen der Dicke des Gegenstands umfasst.

14. Maschine nach Anspruch 13, **dadurch gekennzeichnet, dass** das Mittel (40) zum Messen der Dicke bandabwärts des Abtastbereichs (11), bezogen auf die Durchlaufrichtung des Durchlaufsystems (5), angeordnet ist.

15. Maschine nach einem der Ansprüche 13 oder 14, **dadurch gekennzeichnet, dass** ein dritter Ansaugbereich (41) unter dem Durchlaufsystem (5) und unter dem Mittel zum Messen der Dicke (40) angeordnet ist.

16. Maschine nach Anspruch 15, **dadurch gekennzeichnet, dass** der dritte Ansaugbereich (41) und das Mittel (40) zum Messen der Dicke auf dem Niveau des abfallenden Abschnitts (7B), nach dem Abtastbereich (11) befestigt sind.

17. Maschine nach einem der Ansprüche 13 bis 16, **dadurch gekennzeichnet, dass** das Mittel (40) zum Messen der Dicke durch wenigstens zwei Unteranordnungen zum Messen, vorzugsweise durch vier (40A, 40B, 40C, 40D) ausgebildet ist, die voneinander beabstandet, jedoch funktional miteinander verbunden sind, um so mehrere Messpunkte zu erhalten.

18. Maschine nach Anspruch 17, **dadurch gekennzeichnet, dass** die Unteranordnungen (40A, 40B, 40C, 40D) zum Messen an einem gemeinsamen Querträger (43) befestigt sind, mit der Möglichkeit, den Abstand derselben einzustellen, wobei der Querträger (43) sich in Querrichtung unter dem Durchlaufsystem (5) erstreckt.

19. Maschine nach einem der Ansprüche 1 bis 18, **dadurch gekennzeichnet, dass** die Aufzeichnungskamera (13) funktional mit einem Computersystem zur Verarbeitung der übertragenen Abbildung verbunden ist.

20. Maschine nach einem der Ansprüche 1 bis 19, **dadurch gekennzeichnet, dass** sie in einer Maschine zum automatischen Beurteilen der Qualität von Häuten, die aus Gerbereien kommen, besteht.

21. Verfahren zum Detektieren und Erkennen von Fehler, die an der Oberfläche von Häuten aus Gerbereien vorhanden sind, wobei das Verfahren umfasst:
Sicherstellen der Beleuchtung der Oberfläche der Haut (P) und Aufzeichnen der Abbildung der Haut (P) durch eine Kamera (13),
danach Verarbeiten und Analysieren der Informationen und Signale, welche die Abbildung bilden, die durch die Kamera übertragen wird, mit Hilfe eines Computersystems zur Bearbeitung und Analyse, um die Fehler der Haut (P) zu Detektieren und zu Erkennen,
wobei das Verfahren **gekennzeichnet ist durch**
Verwenden einer Graustufenkamera (13) mit hoher Auflösung,
Beleuchten der Haut (P) von oben und von unten **durch** ein lichtdurchlässiges Band (7), um einen Bildhintergrund herzustellen, welcher die Stufe Weiß darstellt, um so die äußere Kontur und die Löcher der Haut (P) in deutlichem Kontrast zu dem lichtdurchlässigen Band (7) zu detektieren, das beleuchtet wird und die Stufe Weiß darstellt, wobei das Band (7) ein endloses Förderband (7) bildet, welches einen ansteigenden Abschnitt (7A) aufweist, dessen erster Teil den Einlegebereich (10) bildet, wobei auf den ansteigenden Abschnitt von dessen höchstem Punkt (30) aus ein abfallender Abschnitt (7B) folgt, derart, dass die Haut (P) eine Winkeländerung erfährt, während sie über den höchsten Punkt (30) geht, um so einen Effekt der Öffnung der Struktur der Haut (P) zu erreichen, wobei der Abtastbereich (11) im Wesentlichen auf dem Niveau des höchsten Punkts (30) angeordnet ist.

22. Verfahren nach Anspruch 21, **dadurch gekennzeichnet, dass** auf den abfallenden Abschnitt (7B) ein rückführender Abschnitt (7C) folgt, hin zu dem ansteigenden Abschnitt (7A).

23. verfahren nach Anspruch 21 oder 22, **gekennzeichnet durch** Schließen, ausgehend von der Bestimmung der Kontur der Haut (P), auf die nutzbare Fläche derselben.

24. Verfahren nach Anspruch 23, **gekennzeichnet durch** Detektieren der Fehler der Oberfläche auf Grund eines Helligkeitsunterschieds des Grau, Ermitteln der Fläche derselben und Berechnen eines Verhältnisanteils der verfügbaren fehlerlosen Fläche.

25. Verfahren nach Anspruch 24, **gekennzeichnet durch** Ausführen der Berechnung der verfügbaren fehlerlosen Fläche auf Grund spezifischer Oberflächenbereiche, welche vorab definiert sind, oder auf eine allgemeine Weise.

26. Verfahren nach einem der Ansprüche 21 bis 25, **gekennzeichnet durch** Bestimmen der Fläche der größen Schädigung der Haut (P), für jeden vorab definierten Fehlertyp.

27. Verfahren nach einem der Ansprüche 24 bis 26, **gekennzeichnet durch** Ausführen einer automatischen Klassifizierung der Haut (P), ausgehend von Flächenverhältnissen, welche **durch** Vergleich mit vorab aufgestellten Werten vorgegebener Kriterien erhalten werden.

28. Verfahren nach einem der Ansprüche 21 bis 27, **gekennzeichnet durch** Bestimmen der Dicke der Haut (P).

29. Verfahren nach Anspruch 28, **gekennzeichnet durch** Bestimmen der Dicke der Haut (P) nach dem Schritt des optischen Abtastens, in dessen Verlauf die Haut (P) beleuchtet wird.

30. System zum Durchlaufenlassen (5) und zum Beleuchten eines nicht starren und im Wesentlichen flachen Gegenstands (P) von der Art eines textilen Gegenstands oder eines Gegenstands der Gerberei, umfassend:
ein Band (7), welches lichtdurchlässig ist und/oder mit Öffnungen versehen, die ausreichen, um das Licht durchzulassen, wobei das Band (7) mit einem Bereich (10) zum Einlegen des Gegenstands (P) versehen ist,
wobei das Band (7) ein endloses Förderband (7) bildet, welches einen ansteigenden Abschnitt (7A) aufweist, dessen erster Teil den Einlegebereich (10) bildet, wobei auf den ansteigenden Abschnitt von dessen höchstem Punkt (30) aus ein abfallender Abschnitt (7B) folgt, derart, dass der Gegenstand (P) eine Winkeländerung erfährt, während er über den höchsten Punkt (30) geht, um so einen Effekt der Öffnung der Struktur des Gegenstands (P) zu erreichen, wobei der Abtastbereich (11) im Wesentlichen auf dem Niveau des höchsten Punkts (30) angeordnet ist,
Beleuchtungsmittel (12), bandabwärts des Einlegebereichs (10), bezogen auf die Durchlaufrichtung des Systems, welche auf der einen Seite ein oberes Beleuchtungsmittel (12A, 12B) umfassen, geeignet, die obere Fläche des Gegenstands (P) zu beleuchten, und auf der anderen Seite ein unteres Beleuchtungsmittel (12C), geeignet, die untere Fläche des Gegenstands (P) zu beleuchten, um so einen deutlichen Beleuchtungskontrast zwischen dem Gegenstand (P) und dem beleuchteten Band (7) zu erreichen.

31. System nach Anspruch 30, **dadurch gekennzeichnet, dass** auf den abfallenden Abschnitt (7B) ein rückführender Abschnitt (7C) folgt, hin zu dem ansteigenden Abschnitt (7A) .
